# FASCICULE DE BREVET EUROPEEN

(11) **EP 3 174 670 B1**
(45) Date de publication et mention de la délivrance du brevet: **17.10.2018**
(21) Numéro de dépôt: 15742288.2
(22) Date de dépôt: 28.07.2015
(51) Int. Cl.: B25J 19/00, H02G 11/02, B25J 17/02

(54) **AMÉLIORATION DE L'ASSEMBLAGE D'UN ROBOT À CARACTÈRE HUMANOÏDE**
VERBESSERUNG DER MONTAGE EINES HUMANOIDEN ROBOTERS
IMPROVEMENT TO THE ASSEMBLY OF A ROBOT OF HUMANIOID NATURE

(30) Priorité: 30.07.2014 FR 1457367
(43) Date de publication de la demande: 07.06.2017
(73) Titulaire: Softbank Robotics Europe, 75015 Paris (FR)
(72) Inventeur: PATEROMICHELAKIS, Nikolaos, F-75015 Paris (FR)
(74) Mandataire: Collet, Alain
(86) Numéro de dépôt international: PCT/EP2015/067267
(87) Numéro de publication internationale: WO 2016/016239

(56) Documents cités:
- EP-A1- 1 093 201
- FR-A1- 2 938 709
- JP-A- 2003 071 773

## Description

L'invention concerne l'amélioration de l'assemblage d'un robot à caractère humanoïde.

Un robot peut être qualifié d'humanoïde à partir du moment où il possède certains attributs de l'apparence et des fonctionnalités de l'homme comme par exemple une tête, un tronc, deux bras, deux mains, deux jambes ou deux pieds. Certains robots ne possédant que le haut du corps peuvent également être considérés comme possédant des caractères humanoïdes. On trouve des robots humanoïdes capables de marcher ou de se déplacer sur une plateforme munie de roues, de faire des gestes, avec les membres ou avec la tête. La complexité des gestes qu'ils sont capables d'effectuer augmente sans cesse.

Pour y parvenir, les robots comprennent de nombreux éléments articulés entre eux. Mécaniquement, les articulations comprennent de nombreux degrés de liberté ; de plus, il est nécessaire de faire transiter des signaux et de la puissance entre les différents éléments articulés. Autrement dit, au moment de l'assemblage d'un robot, il est nécessaire de relier mécaniquement les différents éléments du robot et de les connecter de façon à faire transiter les signaux et la puissance nécessaires au fonctionnement du robot. Les signaux et la puissance peuvent prendre différentes formes, comme par exemple électrique, optique ou hydraulique.

Le document FR 2 938 709 A1 décrit un exemple de robot à caractère humanoïde comprenant une articulation de type pivot entre deux éléments du robot. Un câble électrique raccordant les deux éléments est disposé dans l'articulation.

De façon connue, lors de l'assemblage d'un robot, on établit d'abord l'assemblage mécanique avant d'établir les autres connexions. Cet ordre permet de limiter les longueurs des câbles à connecter. Néanmoins cette méthode d'assemblage présente quelques inconvénients, comme le fait de nécessiter une bonne accessibilité des connecteurs pour leur accès après l'assemblage mécanique. Cette accessibilité rend les câbles et les connecteurs plus accessibles à d'éventuelles détériorations lors de l'utilisation du robot du fait de mouvements non souhaitées ou du fait d'éléments extérieurs pouvant venir abimer les éléments de connexion. Il serait possible d'assurer la protection des câbles après leur connexion. Mais cela entraine des pièces mécaniques supplémentaires qui augmentent la complexité du robot.

L'invention vise notamment à pallier ce défaut en proposant pour une articulation du robot, la connexion de câbles avant l'assemblage mécanique de l'articulation. Ceci permet de protéger les câbles et les connecteurs à l'intérieur de l'articulation.

A cet effet, l'invention a pour objet un procédé d'assemblage d'un robot à caractère humanoïde tel que défini dans la revendication 1.

L'invention peut permettre de connecter le câble avant d'associer les deux éléments au moyen de l'articulation. Cela permet de réaliser des tests de fonctionnement, par exemple électrique, les deux éléments étant dissociés.

L'invention est décrite en relation avec l'articulation de la tête et du tronc d'un robot à caractère humanoïde. Il est bien entendu possible de mettre en oeuvre l'invention pour toutes les autres articulations du robot comme par exemple l'articulation de l'épaule joignant un bras au tronc, l'articulation du coude joignant l'avant bras au bras, l'articulation de la hanche joignant une jambe au tronc...

L'invention s'intéresse plus précisément à deux connexions de nature différente reliant deux éléments du robot, l'une étant mécanique. De nombreux robots utilisent de l'énergie électrique pour leurs actionneurs, notamment ceux des articulations et pour leur pilotage par exemple réalisés au moyen de cartes électroniques reliés à des capteurs de toute nature, permettant des liaisons vers l'extérieur du robot, et pilotant les actionneurs. De la puissance électrique et des signaux électriques sont amenés à transiter par les différentes articulations du robot. Dans l'exemple décrit, l'articulation du cou connecte le tronc à la tête mécaniquement et électriquement au moyen d'un câble souple. Il est bien entendu possible de mettre en oeuvre l'invention avec d'autres formes d'énergie en remplacement ou en complément de l'énergie électrique. Il est notamment possible de faire transiter par le câble de la puissance et/ou des signaux hydrauliques ou optiques. Autrement dit, le câble comprend au moins un conducteur électrique et/ou optique et/ou hydraulique.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent deux exemples de robots pouvant mettre en oeuvre l'invention ;
la figure 2 représente en coupe dans un plan sagittal la tête et le tronc du robot de la figure 1b ;
la figure 3 représente une boîte dans laquelle s'enroule partiellement un câble permettant de connecter la tête et le tronc du robot ;
la figure 4 représente le câble déroulé ;
les figures 5a à 5d représentent plusieurs étapes d'assemblage de la tête et du tronc du robot.

Par souci de clarté, les mêmes éléments porteront les mêmes repères dans les différentes figures.

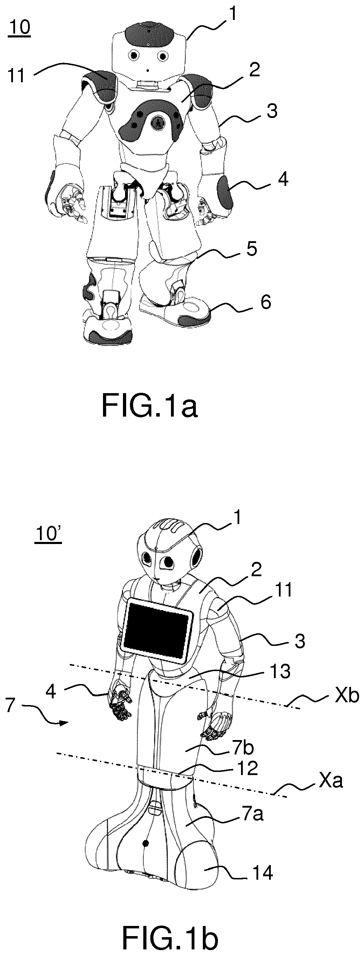

Les figures 1a et 1b représentent deux exemples de robots à caractères humanoïdes développés par la société ALDEBARAN ROBOTICS™. Le robot humanoïde 10 représenté en figure 1a comprend une tête 1, un tronc 2, deux bras 3, deux mains 4, deux jambes 5 et deux pieds 6. Le robot humanoïde 10' représenté en figure 1b comprend une tête 1, un tronc 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le tronc 2 et chacun des bras 3. L'articulation 11 formant une épaule du robot est motorisée autour de deux axes de rotation pour permettre de déplacer le bras 3 par rapport au tronc 2 à la manière des déplacements possibles par une épaule d'un être humain.

Le robot à caractères humanoïdes 10 comprend également plusieurs articulations pour mettre en mouvement les jambes du robot et reproduire le mouvement de la marche, en particulier des articulations assimilables à une hanche, entre le tronc et chacune des cuisses, à un genou, entre une cuisse et la jambe, et à une cheville entre la jambe et le pied. Plusieurs formes d'articulations motorisées sont mises en oeuvre, entrainant en mouvement l'un des membres selon un ou plusieurs degrés de liberté en rotation.

Le robot à caractères humanoïdes 10' présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe 7 comprend aussi une première articulation 12 s'apparentant à un genou, entre une jambe 7a et une cuisse 7b. Une deuxième articulation 13 s'apparentant à une hanche est relie le tronc 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière.

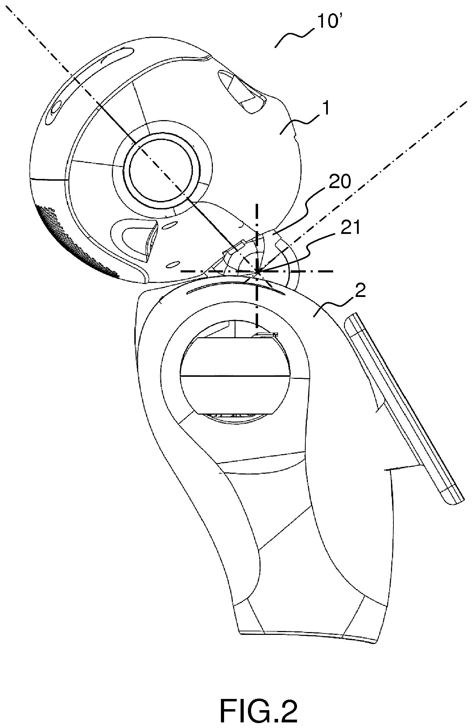

La figure 2 représente en coupe dans un plan sagittal la tête 1 et le tronc 2 du robot 10' de la figure 1b. La tête 1 et le tronc 2 sont reliés par un cou 20 formant une articulation à trois degrés de liberté en rotation. Dans un premier temps, nous nous intéressons à la rotation que permet le cou 20 autour d'un axe 21 perpendiculaire au plan sagittal du robot c'est-à-dire perpendiculairement au plan de la figure 2. Le cou 20 permet une rotation de la tête 1 par rapport au tronc 2. Sur la figure 2, la tête 1 est au voisinage d'une des extrémités de sa plage angulaire.

La rotation de la tête 1 peut être obtenue au moyen d'un actionneur permettant de motoriser l'articulation du cou 20 ou du fait d'une action extérieure, par exemple lorsqu'un effort extérieur est exercé sur la tête 1 ou lors d'un mouvement rapide de la tête 1 entrainant celle-ci par inertie.

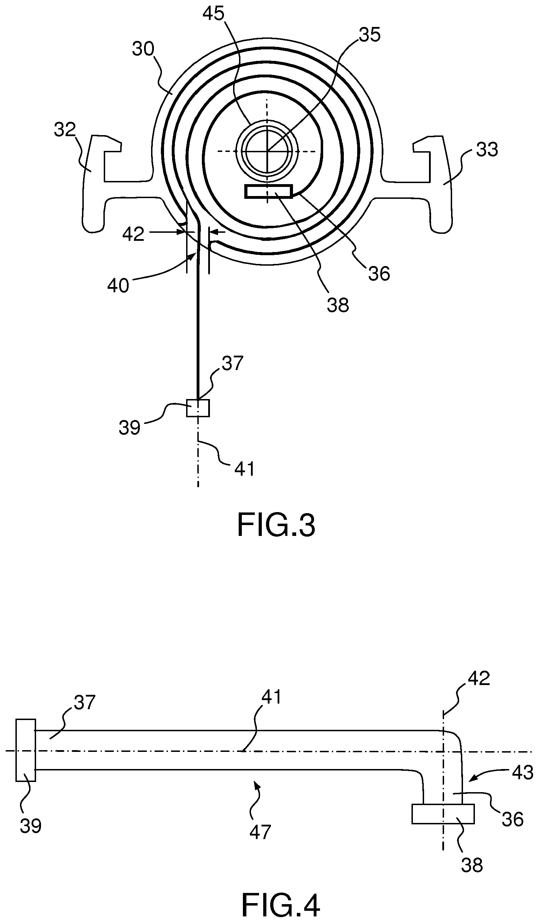

La figure 3 représente une boîte 30 dans laquelle s'enroule partiellement un câble 31. La boîte 30 est destinée à être fixée à la tête 1, par exemple par clippage réalisé au moyen des deux oreilles 32 et 33. Tout autre moyen de fixation démontable est possible pour fixer la boîte 30 à la tête 1, par exemple par vis. La boîte 30 possède une section circulaire centrée autour d'un axe 35 perpendiculaire au plan de la figure 3. Une fois l'assemblage de l'articulation complètement réalisé, l'axe 35 est parallèle à l'axe de rotation 21 du cou 20.

Le câble 31 possède deux extrémités 36 et 37. La première extrémité 36 est raccordée à la tête 1 au moyen d'un connecteur 38 et la seconde extrémité 37 est raccordée au tronc 2 au moyen d'un connecteur 39. Le câble 31 est en partie enroulé dans la boîte 30 autour de l'axe 35 de boîte à partir de sa première extrémité 36. Le câble 31 s'étend hors de la boîte 30 jusqu'à sa seconde extrémité 37.

La boîte 30 comprend un orifice 40 traversé par le câble 31. A partir de l'orifice 40 et au moins sur une partie de son extension hors de la boîte 30, le câble 31 suit une direction rectiligne 41 perpendiculaire à l'axe 35. Pour faciliter la sortie du câble hors de la boîte 30, l'orifice 40 possède une section 42 sensiblement perpendiculaire à la direction 41 du câble 31 s'étendant hors de la boîte 30.

Le câble 31 est enroulé dans la boîte 30 autour de sa première extrémité 36. L'enroulement se fait en spirale autour de la première extrémité 36 jusqu'à la sortie du câble 31 de la boite 30 par l'orifice 40.

Le câble 31 permet de relier électriquement la tête 1 et le tronc 2. Grâce à l'invention, le montage mécanique de l'articulation peut se faire après sa connexion électrique. On définit deux configurations mécaniques de l'articulation, l'une, dite dissociée, où la tête 1 et le tronc 2 sont à distance l'un de l'autre et possèdent entre eux les six degrés de liberté, l'autre, dite associée où l'articulation 20 est opérationnelle. Autrement dit, en configuration associée, l'articulation est connectée mécaniquement, et la tête 1 et le tronc 2 possèdent entre eux le nombre de degrés de liberté défini par l'articulation, c'est à dire au moins un degré de liberté en rotation. Entre les deux configurations, le câble 31 s'enroule plus ou moins dans la boîte 30. Plus précisément, en configuration dissociée, le câble 31 est moins enroulé qu'en configuration associée. L'enroulement et le déroulement du câble est obtenue au moyen de l'élasticité du câble 31. Plus précisément, il est possible de tirer sur l'extrémité 37 du câble 31 suivant la direction 41 pour dérouler partiellement le câble 31 de la boîte 30. Lors du déroulement, les différentes spires du câble 31 formées dans la boîte 30 tendent à se resserrer vers l'axe 35 de la boîte 30. Le déroulement permet d'éloigner le connecteur 39 de la boîte 30 afin de faciliter sa connexion en configuration dissociée.

Lorsqu'on relâche la traction du câble 31 par son extrémité 37, le câble 31 s'enroule naturellement dans la boîte 30 du fait de son élasticité. Les spires du câble 31 tendent à augmenter leur rayon de courbure. L'élasticité du câble tend à augmenter son rayon de courbure.

La figure 4 représente un exemple de câble 31 à section plate pouvant être mis en oeuvre dans l'invention. Sur la figure 4, le câble 31 est représenté complètement déroulé avant son introduction dans la boîte 30. Déroulé, le câble 31 s'étend dans le plan de la figure 3. Pour assurer des connexions électriques, le câble 31 peut être réalisé sous forme d'un circuit imprimé souple. Les conducteurs sont par exemple réalisés en cuivre gravé sur un support plastique tel un polyimide. Le câble 31 s'étend principalement selon la direction 41. La section plate est définie perpendiculairement à la direction 41 et s'étend dans le plan de la figure 4. Au niveau de l'extrémité 36 le câble 31 peut être courbé afin de faciliter la connexion du connecteur 38 hors de la boîte 30. Dans l'exemple représenté, le câble 31 suit une direction 42, perpendiculaire à la direction 41 au voisinage de l'extrémité 36 sur une partie 43 du câble 31.

Autrement dit, le câble 31 comprend au moins un conducteur s'étendant perpendiculairement à sa section plate, c'est-à-dire parallèlement à la direction 41. Le au moins un conducteur est coudé pour permettre la sortie du câble 31 de boîte 30 au niveau de sa première extrémité 36.

La boîte 30 peut comprendre un noyau central 45 auquel on peut fixer le connecteur 38. Lors du montage du câble 31 dans la boîte 30, on maintient le connecteur 38 dans une position fixe par rapport au noyau central 45, s'il existe, ou par rapport au centre de la boîte 30, puis on enroule le câble 31 en spirale autour de son extrémité 36, puis on le fait sortir par l'orifice 40. La partie courbée 43 du câble 31 au voisinage de l'extrémité 36 facilite le maintien du câble 31 dans la boîte 30 durant enroulement.

Avant mise en place dans la boîte 30, le câble 31 possède une partie droite 47 s'étendant naturellement, c'est-à-dire sans contrainte extérieure, selon la direction 41. C'est cette partie qui est enroulée autour de l'extrémité 36. De façon plus générale, le câble 31 possède une partie 47 pouvant s'étendre sans contrainte de façon rectiligne. La partie rectiligne 47 s'enroule dans la boîte 30.

La section plate du câble 31 s'étend tout au long de la partie du câble 31 s'enroulant dans la boîte 30. La section plate du câble 31 s'étend selon un axe parallèle à l'axe 35 de boîte 30.

Un câble plat est bien adapté à une articulation 20 à un degré de liberté en rotation. En configuration associée, c'est-à-dire lorsque l'articulation est opérationnelle, dans sa partie située hors de la boîte 30, le câble peut facilement fléchir autour d'un axe parallèle à l'axe 35 de la boîte 30, c'est-à-dire fléchir autour de l'axe de rotation de l'articulation 20. Si on souhaite articuler la tête 1 par rapport au tronc 2 avec deux ou trois degrés de liberté en rotation, il est possible de dissocier les degrés de liberté en les assemblant en série avec une pièce intermédiaire entre chacun des degrés de liberté. On peut associer à chaque degré de liberté une boîte 30 et un câble 31 tel que décrit ici. Cela permet d'associer ou de dissocier chaque partie de l'articulation indépendamment l'une de l'autre. Il est également possible de prévoir un seul degré de liberté possédant sa boîte 30 et son câble 31. Pour l'autre ou les autres degrés de liberté, on peut prévoir un câblage sans dissociation possible comme par exemple décrit dans la demande de brevet FR 2 938 709 A1.

Alternativement, le câble 31 peut posséder une section ronde. Comme pour un câble à section plate, le câble à section ronde possède une partie pouvant s'étendre sans contrainte de façon rectiligne suivant la direction 41. Cette partie rectiligne est enroulée dans la boîte 30. Un câble à section ronde peut fléchir, dans sa partie située hors de la boîte 30, selon deux axes perpendiculaires à l'axe 41 et éventuellement de se tordre autour de l'axe 41. Un câble à section ronde est bien adapté à une articulation à plusieurs degrés de liberté, la première extrémité 36 du câble 31 étant reliée au premier élément, la tête 1 dans l'exemple décrit, et la seconde extrémité 37 du câble 31 étant reliée au second élément, le tronc 2 dans l'exemple décrit.

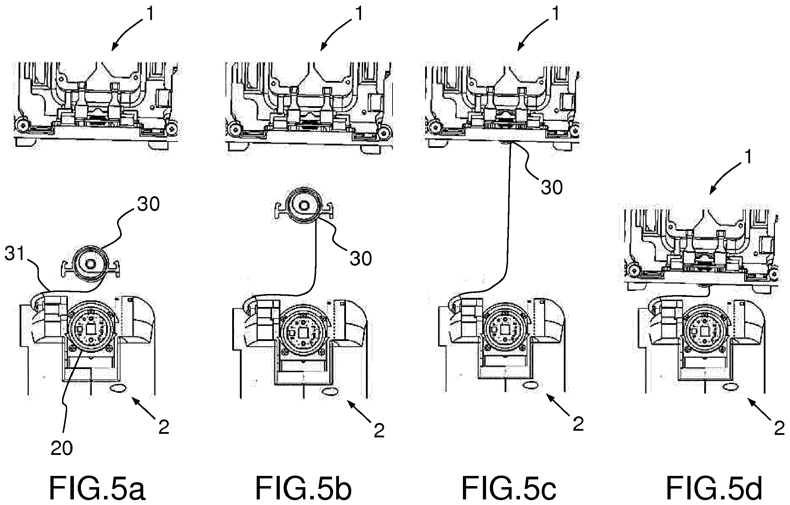

Les figures 5a à 5d représentent plusieurs étapes d'assemblage de la tête 1 et du tronc 2. D'éventuels capots formant la peau du robot ont été ôtés pour réaliser l'assemblage. Pour la tête 1 et le tronc 2, on distingue essentiellement des structures internes à la tête et au tronc. Dans le tronc 2, on distingue l'articulation 20 Sur la figure 5a, la câble 31 est connecté au tronc 2 et la boîte 30 est située à proximité immédiate du tronc. Dans la position de la figure 5b, on tire sur la boîte 30 pour l'éloigner du tronc 2 et la rapprocher de la tête 1. En tirant sur la boîte 30, le câble 31 se déroule partiellement de la boîte 30. Dans la position de la figure 5c, la boîte 30 est fixée à la tête 1 et la connexion du câble 31 est réalisée dans la tête 1. Dans la position de la figure 5c, l'articulation 20 n'est pas mise en place mécaniquement mais il est possible de faire fonctionner électriquement la tête 1 par rapport au tronc 2, le câble 31 connectant les deux éléments 1 et 2. Ceci permet notamment de réaliser des tests électriques de bon fonctionnement avant l'assemblage complet du robot. Après connexion électrique et avant montage mécanique de l'articulation 20, les deux éléments conservent six degrés de liberté dans leur mouvement entre eux. La seule limite dans le mouvement des deux éléments 1 et 2, l'un par rapport à l'autre, est donnée par la présence du câble 31 connecté. La souplesse du câble 31 permet le déplacement relatif des deux éléments 1 et 2 l'un par rapport à l'autre.

Dans la position de la figure 5d, la tête lest rapprochée du tronc 2 pour permettre le montage mécanique de l'articulation 20. Lors du rapprochement de la tête 1 par rapport au corps, le câble 31 s'enroule dans la boîte 30 du fait de son élasticité. Plus précisément, l'opération de montage mécanique de l'articulation consiste en enchaîner dans l'ordre deux étapes :
- rapprochement des deux éléments 1 et 2, lors du rapprochement, le câble 31 s'enroule dans la boîte 30 du fait de son élasticité
- accrochage mécanique des deux éléments 1 et 2.

Ce procédé d'assemblage en deux opérations successives consistant d'abord à réaliser les connexions électriques puis à réaliser la connexion mécanique de l'articulation permet également de protéger les connexions électriques de l'articulation 20. Ces connexions ne sont pas apparentes une fois l'assemblage mécanique de l'articulation 20 réalisé. Les connexions et le câble 31 permettant ces connexions sont complètement protégées à l'intérieur de l'articulation.

Le démontage de l'articulation se fait d'abord en démontant mécaniquement l'articulation 20 puis en déconnectant électriquement le câble 31. Il n'est pas possible de déconnecter le câble 31 tant que l'articulation 20 reste assemblée.

## Revendications

1. Procédé d'assemblage d'un robot à caractère humanoïde (10, 10'), comprenant :
• deux éléments (1, 2),
• une articulation (20) à au moins un degré de liberté en rotation reliant les deux éléments (1, 2) autour d'un axe (21), l'articulation étant montable et démontable afin d'associer et de dissocier les deux éléments (1, 2),
• une boîte (30) à section circulaire fixable à un premier (1) des deux éléments et s'étendant selon un axe (35) sensiblement parallèle à l'axe de rotation (21) de l'articulation (20),
• un câble (31) possédant deux extrémités (36, 37) dont une première (36) est raccordable au premier élément (1) et une seconde (37) est raccordable au second élément (2),
le câble (31) étant en partie enroulé dans la boîte (30) autour de l'axe (35) de boîte (30) et s'étendant hors de la boîte (30) jusqu'à sa seconde extrémité (37), une élasticité du câble (31) lui permettant de s'enrouler dans la boîte (30) entre une configuration dissociée des deux éléments (1, 2) et une configuration associée des deux éléments (1, 2), le procédé étant **caractérisé en ce qu'**il consiste à enchaîner dans l'ordre les opérations suivantes :
• raccorder le câble (31) en ses deux extrémités (36, 37), respectivement au premier et au second des deux éléments (1, 2) dans la configuration dissociée des deux éléments (1, 2),
• monter mécaniquement l'articulation (20).

2. Procédé selon la revendication 1, **caractérisé en ce que** l'opération de montage mécanique de l'articulation consiste en enchaîner dans l'ordre deux étapes :
• rapprochement des deux éléments (1, 2), lors du rapprochement, le câble (31) s'enroule dans la boîte (30) du fait de son élasticité,
• accrochage mécanique des deux éléments (1, 2).

3. Procédé selon la revendication 2, **caractérisé en ce que** le câble (31) possède une partie (47) pouvant s'étendre sans contrainte de façon rectiligne et **en ce que** la partie rectiligne (47) s'enroule dans la boîte (30) lors du rapprochement des deux éléments (1, 2).

4. Procédé selon l'une des revendications 2 ou 3, **caractérisé en ce que** le câble (31) possède une section plate tout au long de la partie du câble qui s'enroule dans la boîte (30) et **en ce que** la section plate s'étend selon un axe parallèle à l'axe (35) de boîte (30).

5. Procédé selon la revendication 4, **caractérisé en ce que** le câble (31) comprend au moins un conducteur s'étendant perpendiculairement à la section plate et **en ce que** le au moins un conducteur est coudé pour permettre la sortie du câble (31) de boîte au niveau de la première extrémité (36) du câble (31).

6. Procédé selon l'une quelconque des revendications 1 à 3, **caractérisé en ce que** l'articulation (20) possède plusieurs degrés de liberté en rotation après montage et **en ce que** le câble (31) possède une section ronde.

7. Procédé selon l'une des revendications précédentes, **caractérisé en ce que** le câble (31) s'enroule dans la boîte (30) autour de sa première extrémité (36).

8. Procédé selon l'une des revendications précédentes, **caractérisé en ce que** la boîte (30) comprend un orifice (41) traversé par le câble (31), l'orifice (40) possèdant une section (42) sensiblement perpendiculaire à une direction (41) du câble (31) s'étendant hors de la boîte (30).

9. Procédé selon l'une des revendications précédentes, **caractérisé en ce que** le câble (31) comprend au moins un conducteur électrique.

10. Procédé selon l'une des revendications précédentes, **caractérisé en ce que** le câble (31) comprend au moins un conducteur optique.

11. Procédé selon l'une des revendications précédentes, **caractérisé en ce que** le câble (31) comprend au moins un conducteur hydraulique.

12. Procédé selon l'une des revendications précédentes, **caractérisé en ce que** le premier élément est une tête (1) du robot (10, 10') et **en ce que** le second élément est un tronc (2) du robot (10, 10').

## Patentansprüche

1. Montageverfahren eines humanoiden Roboters (10, 10'), Folgendes beinhaltend:
• zwei Elemente (1, 2),
• ein Gelenk (20) mit mindestens einem Grad Rotationsfreiheit, welches die beiden Elemente (1, 2) um eine Achse (21) verbindet, wobei das Gelenk montierbar und demontierbar ist, um die beiden Elemente (1, 2) zu verbinden und zu trennen,
• ein Gehäuse (30) mit kreisförmigem Querschnitt, welches an einem ersten (1) der beiden Elemente befestigt werden kann und welche sich entlang einer Achse (35) erstreckt, welche im Wesentlichen parallel zur Drehachse (21) des Gelenks (20) ist,
• ein Kabel (31), welches zwei Enden (36, 37) besitzt, wobei ein erstes Ende (36) an das erste Element (1) angeschlossen werden kann und ein zweites Ende (37) an das zweite Element (2) angeschlossen werden kann,
wobei das Kabel (31) teilweise in dem Gehäuse (30) um die Achse (35) des Gehäuses (30) eingewickelt ist und sich außerhalb des Gehäuses (30) bis zu seinem zweiten Ende (37) erstreckt, wobei eine Elastizität des Kabels (31) es diesem ermöglicht, sich im Gehäuse (30) zwischen einer getrennten Konfiguration der beiden Elemente (1, 2) und einer verbundenen Konfiguration der beiden Elementen (1, 2) aufzurollen, wobei das Verfahren **dadurch gekennzeichnet ist, dass** es darin besteht, in der richtigen Reihenfolge nachstehende Schritte zu bewerkstelligen:
Anschließen des Kabels (31) an seinen beiden Enden (36, 37) jeweils an das erste und an das zweite der beiden Elemente (1, 2) in der getrennten Konfiguration der beiden Elemente (1, 2),
• mechanisches Montieren des Gelenks (20).

2. Verfahren nach Anspruch 1, **dadurch gekennzeichnet, dass** der Schritt des mechanischen Montierens darin besteht, in der richtigen Reihenfolge zwei Schritte auszuführen:
• Annähern der beiden Elemente (1, 2), wobei sich das Kabel (31) beim Annähern aufgrund seiner Elastizität im Gehäuse (30) einwickelt,
• mechanisches Einhängen der beiden Elemente (1, 2).

3. Verfahren nach Anspruch 2, **dadurch gekennzeichnet, dass** das Kabel (31) einen Teil (47) besitzt, welcher sich ohne Spannung geradlinig erstrecken kann und dadurch, dass der geradlinige Teil (47) sich im Gehäuse (30) beim Annähern der beiden Elemente (1, 2) einwickelt.

4. Verfahren nach einem der Ansprüche 2 oder 3, **dadurch gekennzeichnet, dass** das Kabel (31) einen flachen Querschnitt über den gesamten Teil des Kabels besitzt, welcher sich in dem Gehäuse (30) einwickelt und dadurch, dass der flache Querschnitt sich entlang einer Achse erstreckt, welche parallel zur Achse (35) des Gehäuses (30) ist.

5. Verfahren nach Anspruch 4, **dadurch gekennzeichnet, dass** das Kabel (31) mindestens einen Leiter beinhaltet, welcher sich rechtwinklig zum flachen Querschnitt erstreckt und dadurch, dass der mindestens eine Leiter gekröpft ist, um den Austritt des Kabels (31) aus dem Gehäuse an dem ersten Ende (36) des Kabels (31) zu ermöglichen.

6. Verfahren nach einem der Ansprüche 1 bis 3, **dadurch gekennzeichnet, dass** das Gelenk (20) mehrere Grad Rotationsfreiheit nach Montage besitzt und dadurch, dass das Kabel (31) einen runden Querschnitt besitzt.

7. Verfahren nach einem der vorhergehenden Ansprüche, **dadurch gekennzeichnet, dass** das Kabel (31) sich in dem Gehäuse (30) um sein erstes Ende (36) einwickelt.

8. Verfahren nach einem der vorhergehenden Ansprüche, **dadurch gekennzeichnet, dass** das Gehäuse (30) eine Öffnung (41) beinhaltet, welche durch das Kabel (31) durchquert wird, wobei die Öffnung (40) einen Querschnitt (42) besitzt, welcher im Wesentlichen rechtwinklig zu einer Richtung (41) des Kabels (31) ist, welches sich aus dem Gehäuse (30) heraus erstreckt.

9. Verfahren nach einem der vorhergehenden Ansprüche, **dadurch gekennzeichnet, dass** das Kabel (31) mindestens einen elektrischen Leiter beinhaltet.

10. Verfahren nach einem der vorhergehenden Ansprüche, **dadurch gekennzeichnet, dass** das Kabel (31) mindestens einen optischen Leiter beinhaltet.

11. Verfahren nach einem der vorhergehenden Ansprüche, **dadurch gekennzeichnet, dass** das Kabel (31) mindestens einen hydraulischen Leiter beinhaltet.

12. Verfahren nach einem der vorhergehenden Ansprüche, **dadurch gekennzeichnet, dass** das erste Element ein Kopf (1) des Roboters (10, 10') ist und dadurch, dass das zweite Element ein Rumpf (2) des Roboters (10, 10') ist.

## Claims

1. A method for assembling a robot of humanoid type (10, 10'), comprising:
• two elements (1, 2),
• an articulation (20) with at least one degree of freedom in rotation linking the two elements (1, 2) about an axis (21), the articulation being able to be mounted and dismantled in order to join and separate the two elements (1, 2),
• a box (30) with circular section fixable to a first (1) of the two elements and extending along an axis (35) substantially parallel to the axis of rotation (21) of the articulation (20),
• a cable (31) having two ends (36, 37) of which a first (36) is connectable to the first element (1) and a second (37) is connectable to the second element (2),
the cable (31) being partly wound in the box (30) about the axis (35) of the box (30) and extending out of the box (30) to its second end (37), an elasticity of the cable (31) allowing it to be wound in the box (30), between a separated configuration of the two elements (1, 2) and a joined configuration of the two elements (1, 2), the method being **characterized in that** it consists in sequencing, in order, the following operations:
• connecting the cable (31) at its two ends (36, 37), respectively to the first and to the second of the two elements (1, 2) in a separated configuration of the two elements (1, 2),
• mechanically mounting the articulation (20).

2. The method as claimed in claim 1, **characterized in that** the operation of mechanically mounting the articulation consists in sequencing, in order, two steps:
• bringing together the two elements (1, 2), in the bringing together, the cable (31) is wound in the box (30) because of its elasticity,
• mechanical attachment of the two elements (1, 2).

3. The method as claimed in claim 2, **characterized in that** the cable (31) has a part (47) that can extend without stress rectilinearly and **in that** the rectilinear part (47) is wound in the box (30) in the bringing together of the two elements (1, 2).

4. The method as claimed in one of claims 2 or 3, **characterized in that** the cable (31) has a flat section all along the part of the cable which is wound in the box (30) and **in that** the flat section extends along an axis parallel to the axis (35) of the box (30).

5. The method as claimed in claim 4, **characterized in that** the cable (31) comprises at least one conductor extending at right angles to the flat section and **in that** the at least one conductor is bent to allow the cable (31) to exit from the box at the first end (36) of the cable (31).

6. The method as claimed in any one of claims 1 to 3, **characterized in that** the articulation (20) has several degrees of freedom in rotation after mounting and **in that** the cable (31) has a round section.

7. The method as claimed in one of the preceding claims, **characterized in that** the cable (31) is wound in the box (30) about its first end (36).

8. The method as claimed in one of the preceding claims, **characterized in that** the box (30) comprises an orifice (41) passed through by the cable (31), the orifice (40) having a section (42) substantially at right angles to a direction (41) of the cable (31) extending out of the box (30).

9. The method as claimed in one of the preceding claims, **characterized in that** the cable (31) comprises at least one electrical conductor.

10. The method as claimed in one of the preceding claims, **characterized in that** the cable (31) comprises at least one optical conductor.

11. The method as claimed in one of the preceding claims, **characterized in that** the cable (31) comprises at least one hydraulic conductor.

12. The method as claimed in one of the preceding claims, **characterized in that** the first element is a head (1) of the robot (10, 10') and **in that** the second element is a trunk (2) of the robot (10, 10').
